# EUROPEAN PATENT SPECIFICATION

(11) **EP 0 388 170 B1**
(45) Date of publication and mention of the grant of the patent: **13.10.1993**
(21) Application number: 90302702.7
(22) Date of filing: 14.03.1990
(51) Int. Cl.: G01N 27/26, B01L 3/00, G01N 1/10

(54) **Capillary transport zone coated with adhesive**
Kapillartransportzone mit Klebstoffschicht
Zone de transport capillaire revêtue d'adhésif

(30) Priority: 16.03.1989 US 324140
(43) Date of publication of application: 19.09.1990
(73) Proprietor: EASTMAN KODAK COMPANY, Rochester, New York 14650-2201 (US)
(72) Inventor: Columbus, Richard Lewis, c/o Eastman Kodak Company, Rochester, New York 14650 (US)
(74) Representative: Mackett, Margaret Dawn

(56) References cited:
- EP-A- 0 057 110
- WO-A-88/07666
- US-A- 4 193 803
- US-A- 4 254 083
- US-A- 4 352 925
- US-A- 4 473 457

## Description

This invention is directed to a device and a method of making it, wherein the wettability of the surface of a liquid transport device is controlled by a coating applied thereto.

Capillary transport zones have been provided to convey drops of patient sample along a path to a test area such as is provided by an ion-selective electrode, and/or to a drop of reference liquid to form, e.g., an electrically conductive interface. Examples of such arrangements are shown in US-A-4233029 and US-A-4310399. In US-A-4233029, opposing surfaces which are spaced apart by a capillary distance are held together, with such a spacing, by means of adhesive. In US-A-4310399, the surfaces are said to be joined with their capillary spacing, by the use of ultrasonic bonding. To permit such bonding, plastics materials are preferred.

Highly preferred plastics materials are those which are readily manufacturable and provide adequate support when used in a test element containing such a capillary transport zone. The problem has been that the material of choice, relative to these manufacturing considerations, is polystyrene, which has a serious disadvantage, namely, that it is not readily wetted by the patient samples of choice. Thus, polystyrene typically forms a high equilibrium contact angle with water and serum, specifically 87° and 83° respectively, for a typical polystyrene. Such poor wettability tends to make the flow behavior of patient sample through the transport zone, erratic and unpredictable. Although geometric surfaces on the polystyrene can be used to overcome such erratic behavior, a more convenient construction of the transport zone would be one in which the surface is inherently more wettable. In such a case, the need for geometric surface designs would be avoided. Prior to this invention, it has been difficult to find a plastics material which is both more wettable and has the manufacturability of plastics material like polystyrene.

Although wetting agents have been applied to the polystyrene in an effort to solve the wettability problem, these agents in turn tend to have the problem of interacting with the patient sample in one way or another. For example, a physical interaction of swelling occurs when using gelatin as the wetting agent as described in US-A-4549952. This swelling has an advantageous function of increasing the viscosity of the flowing liquid. However, it also requires careful spacing tolerances, lest the gelatin swell to the point of preventing necessary liquid flow. According to WO 88/07 666 surface active agents are used to solve the wettability problem.

It is therefore an object of the present invention to provide a wetting agent which solves the wettability problem of the polystyrene, while remaining inert to the patient sample. Furthermore, the wetting agent has the fortuitous property of being an adhesive for the bonding together of plastics parts used to form the transport zone. As such, it can be coated in a single pass to provide both the joining function and the wetting function.

More specifically, in accordance with one aspect of the present invention, there is provided a device providing a liquid transport zone for moving liquid along a path by capillary action, the zone comprising opposing surfaces joined together so as to provide a capillary spacing between the surfaces, each surface comprising a supporting material having an equilibrium contact angle with serum which is greater than about 80° or less than about 30°,
characterized in that at least one of the opposing surfaces is coated in at least a portion of the transport zone with an adhesive capable of bonding together the supporting material of the surfaces, the adhesive, when cured, having an equilibrium contact angle with serum that is less than about 80° and greater than about 30°.

In accordance with another aspect of the invention, there is provided a method of making a device containing a liquid transport zone capable of transporting patient sample through the zone via capillary action, the zone comprising opposing surfaces joined together so as to provide a capillary spacing between the surfaces, each surface comprising a supporting material having an equilibrium contact angle with serum which is outside the range of about 30° to about 80°,
the method comprising the steps of
a) providing the supporting material configured with the opposing surfaces;
b) coating at least a portion of the supporting material of at least one of the surfaces with an adhesive capable of bonding together the supporting material of the surfaces, the adhesive, when dry, having an equilibrium contact angle with serum that is less than about 80° and greater than about 30°, some of the adhesive being applied in at least a portion of the area of the transport zone;
c) joining the supporting material; and
d) curing the adhesive.

It is an advantageous feature of the invention that a readily manufacturable plastics material having an equilibrium contact angle with serum which is greater than about 80°, can be used to manufacture liquid transport devices without sacrificing surface wettability properties and without requiring the use of a coating whose swelling properties requires careful maintenance of tolerances.

It is a related advantageous feature of the invention that such a liquid transport device can be manufactured without always requiring complicated geometric surface designs to aid in control of liquid flow.

It is another advantageous feature of the invention that such a liquid transport device can be manufactured from such plastics material without requiring coating steps which are separate and distinct from the steps already used in the manufacture.

The present invention will now be described by way of example only with reference to the accompanying drawings in which:
Figure 1 is a partially schematic illustration of the effect created by adhesive in accordance with the present invention, on the equilibrium contact angle of serum, when the adhesive is applied to the underlying plastics support;
Figure 2 is a plan view of a useful liquid transport device prepared in accordance with the present invention;
Figure 3 is a fragmentary sectioned view taken along the line III-III of Figure 2;
Figure 4 is a sectioned view taken along the line IV-IV of Figure 2; and
Figure 5 is a plan view of the bottom member of the transport device illustrated in Figure 2, and illustrating the method of the invention as applied to the device shown in Figure 2.

The invention is described in connection with its use with a preferred liquid transport device, namely, an ion-selective test element useful in clinical analysis, constructed preferably from plastics material. In addition, it is useful in any liquid transport device wherein two opposing surfaces are assembled together using an adhesive to bond them together. It is further useful with any materials the surface of which has undesirable wetting characteristics, be they relatively unwettable, such as most plastics materials, or too wettable, such as glass wherein the equilibrium contact angle for water is about 5°.

As used herein, "adhesive" refers to any material, applied either as a liquid or a pre-coated solid layer, which will cause two surfaces to adhere to each other after proper curing. Because of the nature of the invention, those two surfaces are preferably those used in the preparation of the liquid transport device.

As used herein, "curing" means that sequence of events which is needed to render the adhesive operative to hold surfaces together. The exact steps vary, depending on the adhesive used. For the preferred adhesives hereinafter enumerated, the curing proceeds by heating the adhesive until it is liquid (if not already at that temperature), and then cooling it until it solidifies.

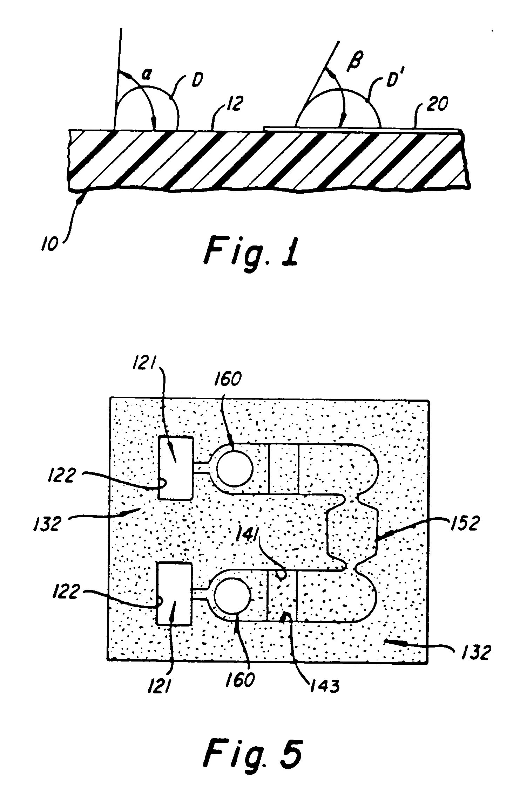

Referring initially to Figure 1, a support material 10 is shown. This illustrates that liquids to be transported do not readily wet the support material 10 of choice, for example when the material is made from a plastics material such as polystyrene. A drop D of a liquid to be transported, for example, water or serum, if placed on a nominally smooth surface 12 of support material 10, makes an equilibrium contact angle α with the surface 12, that is, as noted above, 87° for water and 83° for serum. This is quite unwettable, and renders difficult the control of liquid spreading over surface 12.

However, when a coating 20 of the adhesive according to the invention is formed on such surface 12, the equilibrium contact angle of a drop D' of the same liquid is reduced to angle β, which is a value of between about 80° and about 30°, most preferably, between 65° and 75°, depending on which adhesive is selected.

As noted, any adhesive is useful if it is capable of bonding the support materials used to form the opposing surfaces of the capillary transport zone, and provides the desired wettability. Preferred are polyester adhesives, particularly those described in US-A-4352925, US-A-4416965 and US-A-4140644. Thus, particularly preferred are terephthalate polyester adhesives prepared from glycols, and most particularly those polyesters comprising 30 to 50 mole percent of recurring units derived from diethylene glycol and 50 to 70 mole percent of recurring units derived from ethylene glycol making up the glycol-derived portion of the polyester and 100 mole percent terephthalic acid making up the acid-derived portion of the polyester, although units derived from other acids, especially aromatic and alicyclic acids, and combinations of acids, are also expected to be useful. It is further expected that useful adhesives include the hot melt adhesives of US-A-4193803, and that small amounts of other glycols and acids can be incorporated in the polymers without destroying the required adhesive and wettability properties.

In general, polyesters having recurring units derived from other poly(alkylene glycol) monomers, e.g., triethylene glycol, tetraethylene glycol, dipropylene glycol, tripropylene glycol, etc., and other ether monomers such as the 1,4-bis(2-hydroxyethoxy)cyclohexane of US-A-4193803 can be partially or fully substituted for the diethylene glycol recurring units of US-A-4352925 as well as polyimides and polyester imides wherein any of the oxygen atoms in the poly(alkylene glycol) and/or other glycol monomers recurring units are replaced with imine groups, i.e., units derived from imine monomers such as 3,3'-iminobis(propylamine), 2,2'-iminodiethanol, 2,2'-oxybis(ethylamine), 2-(2-aminoethylamino)ethanol, etc. In addition, a percentage of the glycol can be an alkylene glycol other than ethylene glycol, for example, neopentyl glycol, as is described in US-A-4140644.

A currently preferred adhesive is poly(ethylene-co-2,2'-oxydiethylene (63/37) terephthalate), i.e., as can be obtained under the trademark "Kodabond 5116" adhesive polyester from Eastman Kodak Company. Example 1 of US-A-4352925 illustrates a preparation for this preferred adhesive. The adhesives of the invention all can be prepared by the techniques described in US-A-4352935 and US-A-4193803.

Other preferred adhesives include poly(2, 2-dimethyl-1,3-propylene-co-2,2'-oxydiethylene (80/20) terephthalate) and poly(2,2-dimethyl-1,3-propylene-co-2,2'-oxydiethylene (50/50) terephthalate).

Another advantage of the aforementioned adhesives is that they coat hydrophobic surfaces without loss of any deliberate surface features.

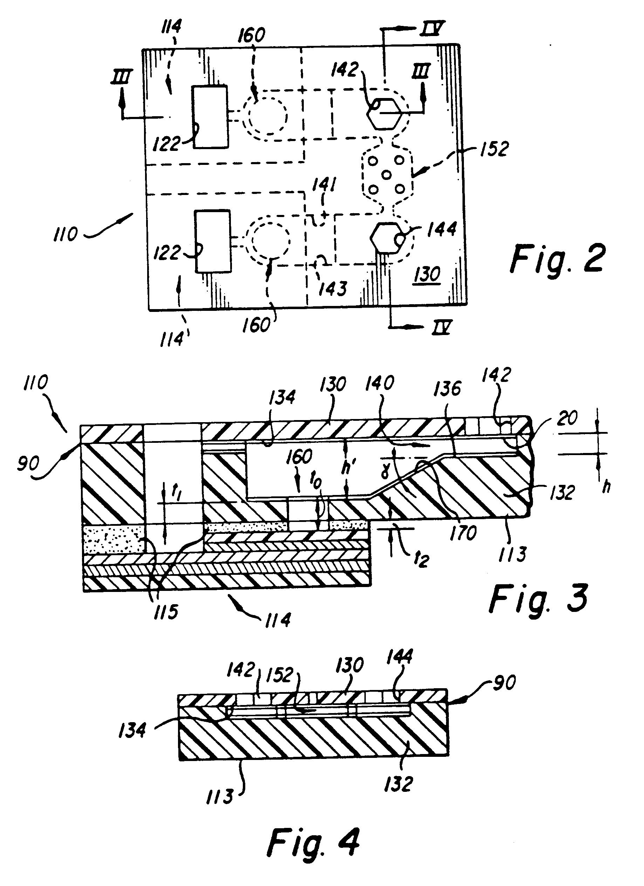

Figures 2 to 4 are representative of the type of capillary liquid transport devices 110 which can be made using the present invention. Others will readily be apparent from this example. The device is an ion-selective electrode (ISE) test element for potentiometric determination of ionic analytes, using two identical ion-selective electrodes 114 and 114', as shown in Figures 2 and 3. These are adhered by an adhesive layer 115 to the under surface 113 of a support material 132 (Figure 3). Upper surfaces 136 and 170 of material 132 are part of one of the opposing surfaces which provides the capillary action to move the liquid. The other opposing surface is surface 134 of support material 130, which is joined at interface 90 to support material 132. Liquid access apertures 142 and 144 are provided in material 130 (Figures 2 and 3). Further details of this device and its use are provided in US-A-4473457. The capillary spacing of transport zone 140 is then the distance h in the ion bridge portion 152, which expands to h' in the vicinity of apertures 160.

Figure 5 illustrates a preferred method of manufacture. The entire exposed surface of support material 132 is coated in a single pass with the adhesive (shown as speckles), so that not only does it occur at the portions which bind to support material 130, but also on the liquid flow surfaces of the transport zone. (Vertically extending surfaces such as 141 and 143 can also be coated, and also surface 122 of apertures 121, or apertures 160, but this is optional.) The other support member 130 (Figure 3) is then joined to member 132 at interface surfaces 90 (Figures 3 and 4) and the adhesive is allowed to cure by cooling to room temperature.

The dried adhesive coating 20 on the surfaces 136, 170 and 134 of zone 140 then acts to improve the wettability and flow characteristics of zone 140 when liquid (e.g., an aqueous solution or serum) is added. More specifically, the following table illustrates the improvement in the equilibrium contact angle, a standard measure of wettability, on the noted support material, using the adhesives according to this invention.

The blood serum was a single sample arbitrarily chosen from a normal patient having no known disease condition. The water was de-ionized water.

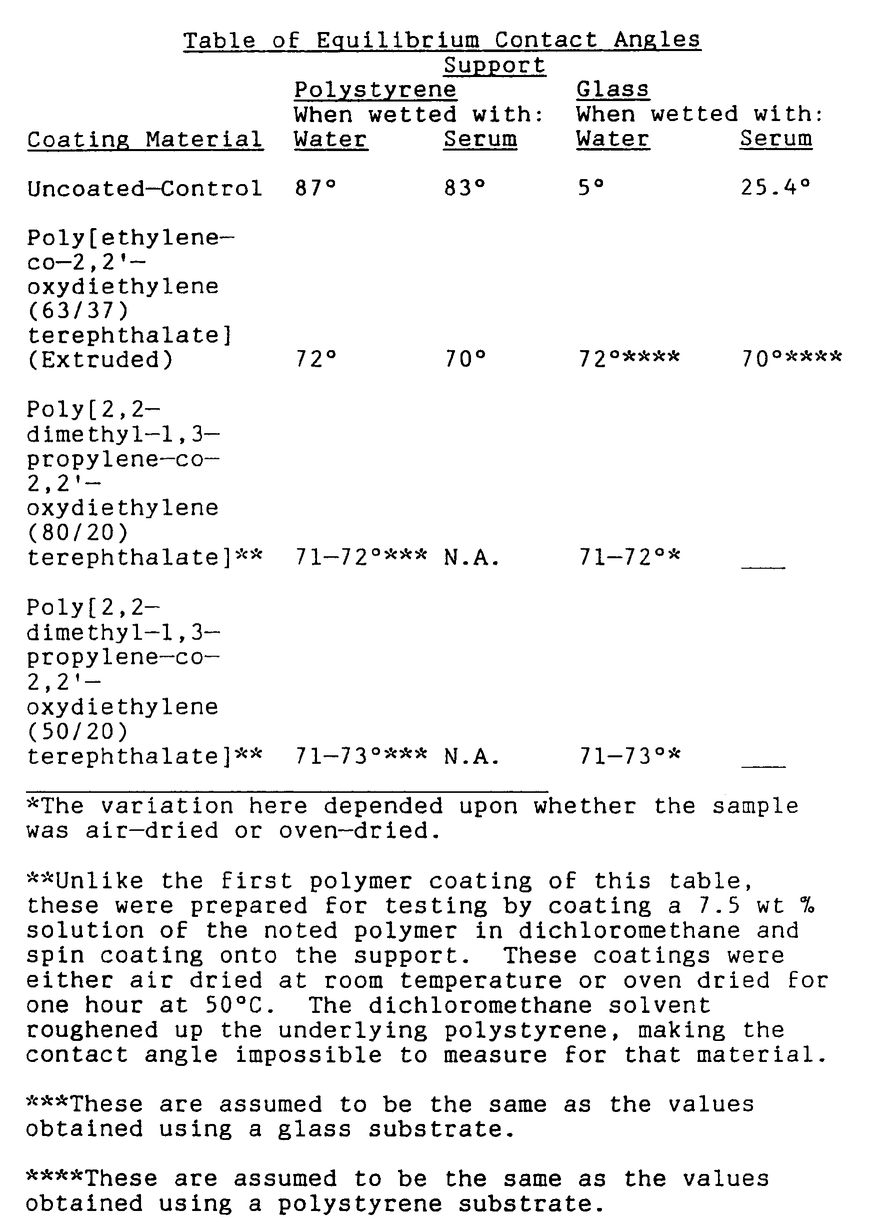

The values of 70° to 73° are adequate for satisfactory flow. Values of 65° to 70° are also useful, and actually preferred in some uses.

The adhesive has been shown to be very effective in providing controlled flow of biological liquids, without swelling such as can cause the capillary zone to become plugged. Dimensional tolerances of spacing h and h' and of coating 20 are of no concern, except that the adhesive coating should not completely fill the capillary zone.

Alternatively, not shown, the adhesive can be applied to just one of the two opposing surfaces to improve wettability of just that surface.

Still further, a geometric design (not shown) such as is shown in US-A-4618476 can be coated with the adhesive of this invention to achieve excellent liquid flow properties.

## Claims

1. A device providing a liquid transport zone (140) for moving liquid along a path by capillary action, the zone (140) comprising opposing surfaces (134, 136, 170) joined together so as to provide a capillary spacing between the surfaces (134, 136, 170), each surface (134, 136, 170) comprising a supporting material (130, 132) having an equilibrium contact angle with serum which is greater than about 80° or less than about 30°,
characterized in that at least one of the opposing surfaces (134, 136, 170) is coated in at least a portion of the transport zone (140) with an adhesive capable of bonding together the supporting material (130, 132) of the surfaces (134, 136, 170), the adhesive, when cured, having an equilibrium contact angle with serum that is less than about 80° and greater than about 30°.

2. A device according to claim 1, wherein the adhesive is also disposed between the supporting material (130, 132) of the surfaces (134, 136, 170) where they are joined together.

3. A device according to claim 1 or 2, wherein the cured adhesive provides an equilibrium contact angle with serum that is between about 65° and about 75°.

4. A device according to any one of claims 1 to 3, wherein the adhesive comprises an amorphous polyester comprising a glycol and terephthalic acid, having from about 30 to about 50 mole percent of its recurring glycol units being derived from diethylene glycol, and from about 50 to about 70 mole percent of its recurring glycol units being derived from ethylene glycol.

5. A device according to claim 4, wherein the adhesive is poly[ethylene-co-2,2'-oxydiethylene terephthalate].

6. A device according to claim 1 or 2, wherein the adhesive is selected from the group consisting of poly[ethylene-co-2,2'-oxydiethylene terephthalate]; and poly(2,2-dimethyl-1,3-propylene-co-2,2'-oxydiethylene terephthalate).

7. A method of making a device according to claim 1 containing a liquid transport zone (140) capable of transporting patient sample through the zone (140) via capillary action, the zone (140) comprising opposing surfaces (134, 136, 170) joined together so as to provide a capillary spacing between the surfaces (134, 136, 170), each surface (134, 136, 170) comprising a supporting material (130, 132) having an equilibrium contact angle with serum which is outside the range of about 30° to about 80°,
the method comprising the steps of
a) providing the supporting material (130, 132) configured with the opposing surfaces (134, 136, 170);
b) coating at least a portion of the supporting material (130, 132) of at least one of the surfaces (134, 136, 170) with an adhesive capable of bonding together the supporting material (130, 132) of the surfaces (134, 136, 170), the adhesive, when dry, having an equilibrium contact angle with serum that is less than about 80° and greater than about 30°, some of the adhesive being applied in at least a portion of the area of the transport zone (140);
c) joining the supporting material (130, 132); and
d) curing the adhesive.

8. A method according to claim 7, and further including the step of applying the adhesive to the supporting material (130, 132) of one of the surfaces (134, 136, 170) at locations designed to contact the supporting material (130, 132) of the other of the surfaces (134, 136, 170),
so that in step c), the supporting material (130, 132) are joined together by the adhesive disposed between them.

9. A method according to claim 8, wherein the adhesive is applied to the opposing surface and to the contacting locations in a single pass.

10. A method according to claim 7 or 8, wherein the adhesive comprises an amorphous polyester of a glycol and terephthalic acid, having from about 30 to about 50 mole percent of its recurring glycol units being derived from diethylene glycol, and from about 50 to about 70 mole percent of its recurring glycol units being derived from ethylene glycol.

11. A method according to claim 10, wherein the adhesive is poly[ethylene-co-2,2'-oxydiethylene terephthalate].

12. A method according to claim 7, wherein the adhesive is selected from the group consisting of poly[ethylene-co-2,2'-oxydiethylene terephthalate]; and poly(2,2-dimethyl-1,3-propylene-co-2,2'-oxydiethylene terephthalate).

## Patentansprüche

1. Vorrichtung mit einer Flüssigkeits-Transportzone (140) zur Fortbewegung einer Flüssigkeit längs eines Weges durch Kapillarwirkung, in der die Zone (140) einander gegenüberliegende Oberflächen (134, 136, 170) aufweist, die miteinander verbunden sind, derart, daß sie einen Kapillarabstand zwischen den Oberflächen (134, 136, 170) bilden, wobei eine jede Oberfläche (134, 136, 170) ein stützendes Material (130, 132) aufweist mit einem Gleichgewichts-Kontaktwinkel gegenüber Serum, der größer als etwa 80° oder kleiner als etwa 30° ist,
dadurch gekennzeichnet, daß mindestens eine der einander gegenüberliegenden Oberflächen (134, 136, 170) in mindestens einem Teil der Transportzone (140) mit einem Klebstoff beschichtet ist, der das stützende Material (130, 132) der Oberflächen (134, 136, 170) zu verbinden vermag, wobei der Klebstoff, wenn er gehärtet wird, einen Gleichgewichts-Kontaktwinkel gegenüber Serum aufweist, der kleiner ist als etwa 80° und größer als etwa 30°.

2. Vorrichtung nach Anspruch 1, in der der Klebstoff auch zwischen dem stützenden Material (130, 132) der Oberflächen (134, 136, 170) angeordnet ist, wo diese miteinander verbunden sind.

3. Vorrichtung nach Anspruch 1 oder 2, in der der gehärtete Klebstoff einen Gleichgewichts-Kontaktwinkel gegenüber Serum bildet, der zwischen etwa 65° und etwa 75° liegt.

4. Vorrichtung nach einem der Ansprüche 1 bis 3, in der der Klebstoff einen amorphen Polyester umfaßt, der aufgebaut ist aus einem Glykol und Terephthalsäure mit etwa 30 bis etwa 50 Mol-% wiederkehrenden Glykoleinheiten, die sich von Diethylenglykol ableiten und etwa 50 bis etwa 70 Mol-% wiederkehrenden Glykoleinheiten, die sich von Ethylenglykol ableiten.

5. Vorrichtung nach Anspruch 4, in der der Klebstoff aus Poly[ethylen-co-2,2'-oxydiethylenterephthalat] besteht.

6. Vorrichtung nach Anspruch 1 oder 2, in der der Klebstoff ausgewählt ist aus der Gruppe bestehend aus Poly[ethylen-co- 2,2'-oxydiethylenterephthalat]; und Poly(2,2-dimethyl-1,3-propylen-co-2,2'-oxydiethylenterephthalat).

7. Verfahren zur Herstellung einer Vorrichtung nach Anspruch 1 mit einer Flüssigkeits-Transportzone (140), die eine Probe eines Patienten durch die Zone (140) mittels Kapillarwirkung zu transportieren vermag, wobei die Zone (140) einander gegenüberliegende Oberflächen (134, 136, 170) aufweist, die derart miteinander verbunden sind, daß sie einen Kapillarabstand zwischen den Oberflächen (134, 136, 170) bilden, wobei eine jede Oberfläche (134, 136, 170) ein stützendes Material (130, 132) umfaßt, mit einem Gleichgewichts-Kontaktwinkel gegenüber Serum, der außerhalb des Bereiches von etwa 30° bis etwa 80° liegt,
wobei das Verfahren die folgenden Stufen aufweist
a) Bereitstellung des stützenden Materials (130, 132), das mit den einander gegenüberliegenden Oberflächen (134, 136, 170) ausgestaltet ist;
b) Beschichten mindestens eines Teiles des stützenden Materials (130, 132) mindestens einer der Oberflächen (134, 136, 170) mit einem Klebstoff, der das stützende Material (130, 132) der Oberflächen (134, 136, 170) zu verbinden vermag, wobei der Klebstoff im trockenen Zustand einen Gleichgewichts-Kontaktwinkel gegenüber Serum aufweist, der kleiner als etwa 80° und größer als etwa 30° ist, wobei ein Teil des Klebstoffes in mindestens einem Abschnitt des Bereiches der Transportzone (140) zugeführt wird;
c) Zusammenfügen des stützenden Materials (130, 132); und
d) Härten des Klebstoffes.

8. Verfahren nach Anspruch 7, das die zusätzliche Stufe des Aufbringen des Klebstoffes auf das stützende Material (130, 132) auf eine der Oberflächen (134, 136, 170) aufweist, und zwar in Positionen, die dazu bestimmt sind, daß das stützende Material (130, 132) der anderen Oberfläche (134, 136, 170) in Kontakt miteinander gelangt,
so daß in Stufe c) das stützende Material (130, 132) durch den Klebstoff, der zwischen diesem verteilt ist, zusammengefügt wird.

9. Verfahren nach Anspruch 8, bei dem der Klebstoff auf die gegenüberliegende Oberfläche und die Kontaktstellen in einem Arbeitsgang aufgebracht wird.

10. Verfahren nach Anspruch 7 oder 8, bei dem der Klebstoff einen amorphen Polyester aus einem Glykol und Terephthalsäure umfaßt, wobei etwa 30 bis etwa 50 Mol-% der wiederkehrenden Glykoleinheiten sich von Diethylenglykol ableiten und etwa 50 bis etwa 70 Mol-% der wiederkehrenden Glykoleinheiten sich von Ethylenglykol ableiten.

11. Verfahren nach Anspruch 10, bei dem der Klebstoff ein Poly[ethylen-co-2,2'-oxydiethylenterephthalat] ist.

12. Verfahren nach Anspruch 7, bei dem der Klebstoff ausgewählt ist aus der Gruppe bestehend aus Poly[ethylen-co-2,2'-oxydiethylenterephthalat] ; und Poly(2,2-dimethyl-1,3-propylen--co-2,2'-oxydiethylenterephthalat).

## Revendications

1. Appareil formant une zone (140) de transport de liquide, destiné au déplacement d'un liquide le long d'un trajet par action capillaire, la zone (140) ayant des surfaces opposées (134, 136, 170) qui sont raccordées afin qu'elles forment un espace capillaire entre les surfaces (134, 136, 170), chaque surface (134, 136, 170) ayant une matière de support (130, 132) qui a un angle de contact à l'équilibre avec le sérum qui est supérieur à 80° environ ou inférieur à 30°,
caractérisé en ce que l'une au moins des surfaces opposées (134, 136, 170) est revêtue dans une partie au moins de la zone de transport (140) d'un adhésif capable d'assurer la liaison de la matière de support (130, 132) des surfaces (134, 136, 170), l'adhésif, lorsqu'il a durci, ayant un angle de contact à l'équilibre avec le sérum qui est inférieur à 80° environ et supérieur à 30° environ.

2. Appareil selon la revendication 1, dans lequel l'adhésif est aussi placé entre la matière de support (130, 132) des surfaces (134, 136, 170) qui sont raccordées.

3. Appareil selon la revendications 1 ou 2, dans lequel l'adhésif durci donne un angle de contact à l'équilibre avec le sérum qui est compris entre environ 65 et 75°.

4. Appareil selon l'une quelconque des revendications 1 à 3, dans lequel l'adhésif est un polyester amorphe contenant un glycol et un acide téréphtalique, ayant environ 30 à 50 moles pour cent de ses motifs récurrents glycol qui sont dérivés d'un diéthylèneglycol et environ 50 à 70 moles pour cent de ses motifs récurrents glycol qui sont dérivés d'éthylèneglycol.

5. Appareil selon la revendication 4, dans lequel l'adhésif est le téréphtalate de poly(éthylène-co-2,2'-oxydiéthyléne).

6. Appareil selon la revendication 1 ou 2, dans lequel l'adhésif est choisi dans le groupe qui comprend le téréphtalate de poly(éthylène-co-2,2'-oxydiéthylène) et le téréphtalate de poly(2,2-diméthyl-1,3-propylène-co-2,2'-oxydiéthylène).

7. Procédé de fabrication d'un appareil selon la revendication 1, comprenant une zone (140) de transport de liquide capable de transporter un échantillon d'un patient dans la zone (140) par action capillaire, la zone (140) ayant des surfaces opposées (134, 136, 170) qui sont raccordées afin qu'elle forme un espace capillaire entre les surfaces (134, 136, 170), chaque surface (134, 136, 170) comprenant un matériau de support (130, 132) ayant un angle de contact à l'équilibre avec le sérum qui est en dehors de la plage allant d'environ 30 à 80°,
le procédé comprenant les étapes suivantes :
a) la disposition de la matière de support (130, 132) avec une configuration ayant les surfaces opposées (134, 136, 170),
b) le revêtement d'une partie au moins de la matière de support (130, 132) sur l'une au moins des surfaces (134, 136, 170) d'un adhésif capable d'assurer la liaison de la matière de support (130, 132) des surfaces (134, 136, 170), l'adhésif, lorsqu'il est sec, ayant un angle de contact à l'équilibre avec le sérum qui est inférieur à 80° environ et supérieur à 30° environ, une partie de l'adhésif étant appliquée dans une partie au moins de la région de la zone de transport (140),
c) le raccordement de la matière de support (130, 132), et
d) le durcissement de l'adhésif.

8. Procédé selon la revendication 7, comprenant en outre une étape d'application de l'adhésif à la matière de support (130, 132) de l'une des surfaces (134, 136, 170) à des emplacements destinés à être au contact de la matière de support (130, 132) de l'autre des surfaces (134, 136, 170),
si bien que, dans l'étape c), la matière de support (130, 132) se raccorde à elle-même sous l'action de l'adhésif occupant une position intermédiaire.

9. Procédé selon la revendication 8, dans lequel l'adhésif est appliqué à la surface opposée et aux emplacements de contact en un seul passage.

10. Procédé selon la revendication 7 ou 8, dans lequel l'adhésif est un polyester amorphe d'un glycol et de l'acide téréphtalique, ayant environ 30 à 50 moles pour cent de motifs récurrents glycol dérivés du diéthylèneglycol et environ 50 à 70 moles pour cent de motifs récurrents glycol dérivés d'éthylèneglycol.

11. Procédé selon la revendication 10, dans lequel l'adhésif est le téréphtalate de poly(éthylène-co-2,2'-oxydiéthylène).

12. Procédé selon la revendication 7, dans lequel l'adhésif est choisi dans le groupe qui comprend le téréphtalate de poly(éthylène-co-2,2'-oxydiéthylène) et le téréphtalate de poly(2,2-dimethyl-1,3-propylène-co-2,2'-oxydiéthylène).
